# EUROPÄISCHE PATENTANMELDUNG

(11) **EP 1 936 454 A1**
(43) Veröffentlichungstag der Anmeldung: **25.06.2008**
(21) Anmeldenummer: 07121527.1
(22) Anmeldetag: 26.11.2007
(51) Int. Cl.: G05B 19/042, G05B 19/05, H02J 13/00, H05B 37/02

(54) **Steuereinheit zur Steuerung mindestens eines Verbrauchers**

(30) Priorität: 22.12.2006 DE 102006061137
(71) Anmelder: Siemens Aktiengesellschaft, 80333 Munich (DE)
(72) Erfinder: Ferstl, Peter, 93053 Regensburg (DE)

(57) **Zusammenfassung**

Die Erfindung betrifft eine Steuereinheit (3) zur Steuerung mindestens eines Verbrauchers (10,11,12), wobei die Steuereinheit (3) zur Kommunikation mit mindestens einer zentralen Einheit (1) vorgesehen ist. Es soll eine kostengünstige und einfache Lösung zur Verbrauchserfassung mittels einer Steuereinheit (3) angegeben werden, die zur Ableitung von Verbrauchsdaten aus mindestens einem der Steuereinheit (3) zur Verfügung stehenden Parameter vorgesehen ist, wobei die Verbrauchsdaten zur Charakterisierung eines Verbrauchs (10,11,12) einer Ressource (13), beispielsweise einer technischen Anlage, vorgesehen sind. Aufwendige Zähler, wie z. B. Stromzähler, zur Verbrauchserfassung, werden durch die erfindungsgemäße Steuereinheit (3) hinfällig. Somit wird der Einsatz einer Vielzahl erfindungsgemäßer Steuereinheiten (3) bei gegebenenfalls dezentraler Versorgung der Ressource (13), wie z.B. Strom, unterstützt.

## Beschreibung

Die Erfindung betrifft eine Steuereinheit zur Steuerung mindestens eines Verbrauchers, wobei die Steuereinheit zur Kommunikation mit mindestens einer zentralen Einheit vorgesehen ist. Die Erfindung betrifft weiter ein entsprechendes Verfahren.

Eine derartige Steuereinheit wird zur Realisierung einer Energieverbrauchskontrolle, beispielsweise in Gebäuden, Produktionsanlagen, Automatisierungsanlagen oder ähnlich komplexen Anlagen, die über einen Datenbus oder ein Kommunikationsnetz verfügen, eingesetzt. Aufgrund der Komplexität der Anlagen ist eine genaue Erfassung des Energieverbrauchs für jedes einzelne Gerät in den meisten Fällen schwierig oder zu aufwändig. Eine Kontrolle des Energieverbrauchs ist in der Praxis meist nicht wirtschaftlich, da die Kosten der Messgeräte sehr hoch sind oder aufgrund von Platzproblemen nicht umsetzbar. Meist ist selbst ein ungefährer Näherungswert des Stromverbrauches nicht ermittelbar, wobei beispielsweise lediglich die Hauptenergieverbraucher identifiziert und analysiert werden.

Weiterhin ist es oft nicht möglich, eine Kontrolleinheit, die beispielsweise den elektrischen Stromverbrauch kontrolliert oder misst, an das Kommunikationsnetz oder den Datenbus anzuschließen, da die Anzahl der möglichen Bus- bzw. Netzteilnehmer limitiert ist.

Grundsätzlich ist es möglich beispielsweise bei größeren Stromkreisen zusätzliche Stromzähler einzusetzen, deren Stromwerte über einen zentralen Rechner oder eine zentrale Einheit erfasst und anschließend bearbeitet werden. Leider führt dies zu ungenauen Verbrauchsanalysen, da der Einsatz des Stromzählers sich nur für ausgewählte Stromverbraucher rentiert. Dies resultiert unter anderem aus der Tatsache, dass Stromzähler insbesondere fernauslesbare Stromzähler, relativ teuer sind.

Um einen Näherungswert hinsichtlich des Ressourcenverbrauchs einer Anlage anzugeben, ist der Einsatz von Stromzählern, die nicht fernauslesbar sind, keinesfalls rentabel, da eine kontinuierliche, z. B. stundenweise, manuelle Auslesung zu aufwendig ist.

Aufgrund der Vielzahl der Steuereinheiten, wie beispielsweise INSTABUS- oder EIB-Aktoren, innerhalb eines Datennetzes einer der oben genannten Anlagen ist es extrem aufwendig zu den ohnehin schon komplexen Steuereinheiten, die in der Regel Mess- und Steuermittel beinhalten, zusätzlich einen Stromzähler vorzusehen.

Aus der DE 198 15 169 A1 ist ein Verfahren und eine Vorrichtung zum Betrieb von Energieverbrauchseinheiten bekannt, die einer Zentraleinheit zugeordnet sind, wobei die Zentraleinheit mit Energieverbrauchsstellen verbunden ist und unter Verwendung eines Kanals einen Zählerstand abfragen kann.

Der Erfindung liegt die Aufgabe zugrunde, eine einfache und kostengünstige Steuereinheit bzw. ein einfaches und kostengünstiges Verfahren anzugeben, welche bzw. welches zur Erfassung von Verbrauchsdaten einer Vielzahl von von Steuereinheiten gesteuerten Verbrauchern vorgesehen ist.

Erfindungsgemäß ist die Steuereinheit zur Steuerung mindestens eines Verbrauchers zur Kommunikation mit mindestens einer zentralen Einheit vorgesehen. Die zentrale Einheit kann hierbei eine zentrale Steuereinheit sein oder auch lediglich zum Zwecke der Erfassung der Verbrauchsdaten, beispielsweise im Zusammenhang mit der Erfassung von Betriebsdaten, vorgesehen sein. Die Kommunikation der Steuereinheit mit der zentralen Einheit kann hierbei über einen Bus oder ein Kommunikationsnetz bewerkstelligt werden. In diesem Zusammenhang sind beispielsweise ein INSTABUS oder ein European Installation Bus (EIB) zu nennen. Weitere Teilnehmer des Kommunikationsnetzes bzw. Kommunikationsbusses können weitere Steuereinheiten, wie beispielsweise Aktoren, oder andere Elemente, wie beispielsweise eine zentrale Steuereinheit, ein Computer, eine speicherprogrammierbare Steuerung oder eine Schnittstelle zu einem anderen Netz sein.

Die Steuereinheit ist dadurch gekennzeichnet, dass sie zur Ableitung von Verbrauchsdaten aus der einen oder mehreren der Steuereinheit zur Verfügung stehenden Parametern vorgesehen ist. Verbrauchsdaten sind Daten, die zur Charakterisierung eines Verbrauchs mindestens einer Ressource vorgesehen sind. Zur Charakterisierung zählen beispielsweise eine Ableitung eines Näherungswertes oder eine Berechnung einer Verbrauchsangabe oder eine boolsche Variable im Sinne einer Meldung bei Überschreitung eines Schwellenwertes (Meldung ja/nein). Die Verbrauchsdaten können auf unterschiedliche Weise zur Verarbeitung durch die Steuereinheit bereitgestellt werden. Einerseits ist möglich, dass ein Parameter, der durch einen Messsensor der Steuereinheit gewonnen wird, zur Bildung der Verbrauchsdaten herangezogen wird. Zum anderen können Parameter von anderen Elementen oder Steuereinheiten, die über das Kommunikationsnetz bzw. über den Kommunikationsbus erreichbar sind, zur Berechnung der Verbrauchsdaten herangezogen werden. Dabei müssen die Parameter nicht notwendigerweise aus Messungen durch Messsensoren hervorgegangen sein, sondern können auch auf Prozessdaten, bekannten Kennlinien, oder anderen Informationen zur Anlage basieren.

Hierbei muss die Ressource nicht notwendigerweise aus elektrischem Strom bestehen, sondern kann auch beispielsweise ein Brennstoff, wie beispielsweise Gas, Benzin oder Kohle sein. Im Allgemeinen wird unter Ressource auch ein chemischer Stoff oder Stoffgemisch verstanden, der bzw. das bei einem mehr oder weniger kontinuierlichen Verbrauch durch Verbraucher, das heißt Geräte einer technischen Anlage, aufgebraucht werden.

Bei einer vorteilhaften Ausführungsform ist die Steuereinheit zur Ableitung von Parametern aus der Kommunikation mit der zentralen Einheit, mit einem einer anderen Steuereinheit und/oder einem anderen Element des Kommunikationsnetzes bzw. Busses vorgesehen. Die Parameter, die von den genannten Quellen aus zur Verfügung stehen, müssen nicht nur gemessene Werte darstellen, sondern können auch bereits abgeleitete Parameter sein, die an sich schon aus gemessenen Parameter gebildet worden sind. So könnte beispielsweise die Steuereinheit von der zentralen Einheit oder von einer anderen Einheit einen Parameter (z.B. Stromverbrauch des Verbrauchers bei einer bestimmten Last) erhalten, der aufgrund von Angaben zum Typ des von der Steuereinheit gesteuerten Verbrauchers (z. B. Modell oder Seriennummer) in einer Datenbank der zentralen Einheit ermittelt worden ist und weiterhin zur Gewinnung von Verbrauchsdaten gegebenenfalls in Verbindung mit weiteren Parametern, die beispielsweise durch die Steuereinheit gemessen worden sind (z. B. Betriebsdauer), herangezogen wird.

Bei einer vorteilhaften Ausführungsform ist die Steuereinheit zur Ableitung von mindestens einem Parameter aus einem Steuerparameter, Sensorparameter und/oder aus einem zuvor abgeleiteten Parameter vorgesehen. Hierbei kann der zuvor abgeleitete Parameter von der Steuereinheit oder von einer anderen Einheit stammen.

Vorteilhafterweise sind die Verbrauchsdaten als Werte, als Datenfeld oder als Datensatz ausgeführt. Hierdurch entstehen viele Verwendungsmöglichkeiten für den Benutzer, die beispielsweise eine graphische Anzeige, eine Weiterbearbeitung innerhalb eines Betriebserfassungssystems, oder einer sonstigen Anwendung bezogenen Verwendungsart ermöglicht.

Bei einer vorteilhaften Ausführungsform sind die Verbrauchsdaten zur Verknüpfung verbrauchsrelevanter Parameter vorgesehen. Diese Verknüpfung kann beispielsweise eine Zusammenfassung mehrerer verbrauchsrelevanter Parameter beinhalten oder auch eine mathematische oder anderweitige logische Verknüpfung der Parameter, um beispielsweise den Gesamtverbrauch einer Anlage abzuschätzen oder zu charakterisieren.

Vorteilhafterweise sind die Verbrauchsdaten einem Nutzer, dem anderen Element des Kommunikationsnetzes und/oder der zentralen Einheit zugänglich. Hierdurch wird eine hohe Flexibilität und Weiterverarbeitungsmöglichkeit innerhalb der Anlage bzw. des Kommunikationssystems gewährleistet.

Bei einer vorteilhaften Ausführungsform ist die Kommunikation der Steuereinheit mit dem Nutzer, dem anderen Element des Kommunikationsnetzes und/oder der zentralen Einheit zumindest teilweise drahtlos. Hierdurch ist es möglich, Parameter in die Ableitung der Verbrauchsdaten mit einzubeziehen, die beispielsweise von Sensoren oder Steuereinheiten gemessen werden, die per se schwer zu erreichen sind, wie beispielsweise die Sensoren- oder Steuereinheiten, die an einem Hochtemperaturofen angebracht sind und keine hitzeanfällige Verkabelung erlauben.

Vorteilhafterweise ist die Steuereinheit zur Steuerung mindestens einer Verbrauchergruppe und/oder mindestens eines weiteren Verbrauchers vorgesehen. Bei Verbrauchern, die ähnliche Verhaltensweise an den Tag legen, kann eine vereinfachte Parameterakquisition betrieben werden, so dass eine Gruppierung der Verbraucher und damit eine vereinfachte Parameterermittlung möglich ist. Die Vereinfachung könnte darin bestehen, dass der Parameter für einen Verbraucher ermittelt und der Gesamtverbrauch mit der Anzahl der Verbraucher skaliert wird. Weiterhin ist eine vereinfachte Ermittlung dadurch denkbar, dass aufgrund der Parameterermittlung eines Verbrauchers die jeweiligen Parameter für die weiteren Verbraucher in einfacher Weise angegeben werden können.

Bei einer vorteilhaften Ausführungsform ist die Steuereinheit als ein Aktor, ein INSTABUS-Aktor oder ein EIB-Aktor, insbesondere als ein Lastschalter oder Dimmer, ausgeführt.

Vorteilhafterweise können Verbrauchswerte in Form von Verbrauchsdaten von der vielen, gegebenenfalls allen Verbrauchergruppen oder Verbrauchern erfasst werden, ohne dass zusätzlich teure Messgeräte installiert werden müssen. Folglich kann eine Energieverbrauchsanalyse auch ohne zusätzlichen Materialaufwand bzw. zeitlichen Aufwand erfolgen. Zumindest der zusätzliche Kostenaufwand für integrierte Messmittel in der Steuereinheit bzw. Aktoren entfällt.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der Figur beschriebenen Ausführungsbeispiele näher erläutert.

Es zeigen:

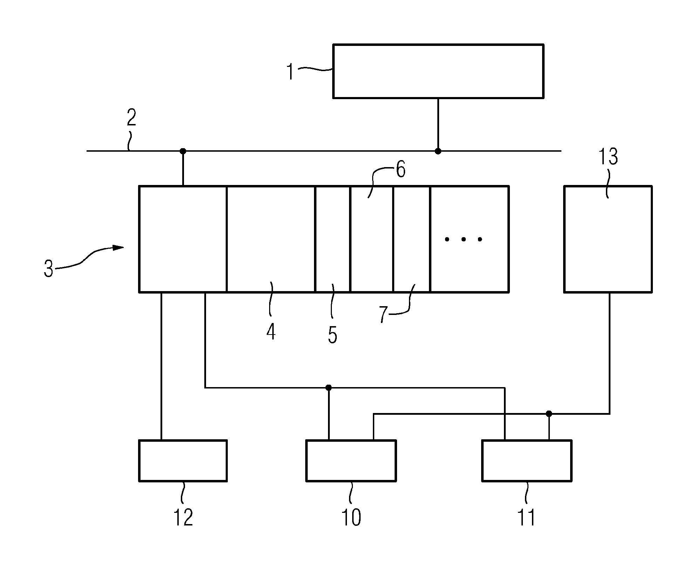

- FIG 1: ein Blockschaltbild eines Verbraucherfassungssystems mit einer Steuereinheit.

FIG 1 zeigt ein Blockschaltbild eines Verbraucherfassungssystems mit einer Steuereinheit 3, die beispielsweise als INSTABUS-Aktor 3 ausgebildet ist. Das Verbraucherfassungssystem kann grundsätzlich weitere Steuereinheiten der gleichen oder einer ähnlichen Art enthalten.

Die Steuereinheit 3 weist Kanäle 4, 5, 6 und 7 und gegebenenfalls weitere Kanäle auf, die über einen Bus 2, beispielsweise ein INSTABUS Informationen in digitalisierter Form zur Verfügung stellen. Weiter ist die Steuereinheit 3 zur Steuerung eines Verbrauchers 12 und einer Verbrauchergruppe 10, 11 der Verbraucher 10 und 11 vorgesehen. Die Stromversorgung 13 stellt die Ressource "Strom" zur Verfügung und ist ebenfalls mit den Verbrauchern 10 und 11 zum Zwecke der Stromversorgung verbunden. Der Verbraucher 12 hingegen erhält Steuerinformationen sowie die erforderliche Betriebsspannung direkt von der Steuereinheit 3 und ist deshalb hinsichtlich des Verbrauchs leicht zu kontrollieren, da die Steuereinheit 3 den Strom für den Verbraucher 12 liefert und gleichzeitig diesen sehr leicht kontrollieren bzw. Informationen über den Verbrauch leicht weiterleiten oder verarbeiten kann.

Die Steuereinheit 3 ist an einen (Daten-)Bus 2, angeschlossen und kann über den Datenbus 2 mit einer zentralen Einheit 1 oder anderen Steuereinheiten oder anderen Elementen, wie beispielsweise Servern, Computern oder ähnlichem kommunizieren.

Die zentrale Einheit 1 kann hierbei als Erfassungsstelle der Verbrauchsdaten verwendet werden und gegebenenfalls gleichzeitig Steuerfunktionen oder Analysefunktionen basierend auf den Verbrauchsdaten, die in Form von Verbrauchsdaten zur Verfügung gestellt werden, generieren, speichern und/oder auswerten. In diesem Zusammenhang ist vorteilhaft, wenn eine derartige zentrale Einheit 1 gleichzeitig zur Betriebsdatenerfassung verwendet wird oder eine zentrale Betriebsdatenerfassung die Funktionen der zentralen Einheit 1 übernimmt.

Vorteilhafterweise ist die Verbrauchergruppe 10, 11 fest in einer technischen Anlage installiert. In Abhängigkeit von der Anwendung ist es gegebenenfalls schwierig, an den Verbrauchern 10 und 11 eine oder mehrere Messeinheiten oder Zähler anzubringen. Eine Abschätzung des Verbrauchs soll mittels der Steuereinheit 3 vollzogen werden.

### a) Ausführungsbeispiel 1: Verbraucher 10 und 11 als Lichtquellen.

Sind die Verbraucher 10 und 11 Lichtquellen, wie beispielsweise eine Glühbirne oder ähnliches, so wird eine Abschätzung des Stromverbrauchs dadurch möglich, indem die Steuereinheit 3 einen boolschen Parameter (Ein/Aus) den Betrieb dieser Verbrauchergruppe 10, 11 zugrunde legt. Hierbei verwendet die Steuereinheit 3 zwei Parameter, zum einen die Zeit und zum anderen den boolschen Parameter, der anzeigt, ob die Verbrauchergruppe 10, 11 geschaltet ist oder nicht. Die Darstellung der Verbrauchsdaten könnte hierbei beispielsweise in Form eines Datenfeldes abgelegt werden, wobei die Belegung eines Elementes den Betriebszustand der Verbraucher 10, 11 zu einem gegebenen Zeitpunkt anzeigt. Gegebenenfalls kann dieses Datenfeld mit einer technischen Information, wie beispielsweise der elektrischen Leistungen der beiden Verbraucher 10 und 11 skaliert werden, so dass das Datenfeld nunmehr den Verbrauch pro Zeiteinheit über einen gewissen Zeitraum, also ein Verbrauchsprofil, angibt.

Diese Verbrauchsdaten in Form eines Datenfeldes werden über einen oder mehrere Kanäle, wie beispielsweise über den Kanal 4 und den Kanal 5 der Steuereinheit 3 über den Bus 2 zur Verfügung gestellt. Diese Verbrauchsdaten werden gegebenenfalls mit anderen Verbrauchsdaten anderer Steuereinheiten kombiniert, um eine Verbrauchsanalyse durchzuführen.

Aus der technischen Information, die gegebenenfalls als Parameter innerhalb des Datennetzes, beispielsweise von der zentralen Einheit 1 oder einer anderen Einheit, zur Verfügung gestellt wird, ist der Steuereinheit 3 bekannt, welche Leistung die Verbrauchergruppe 10, 11 potentiell verbrauchen kann (Verbrauch pro Zeiteinheit, Verbrauch beim Einschalten, etc..) und ist somit in der Lage, zusammen mit der zeitlichen Schaltung der Verbrauchergruppe 10, 11, die tatsächlichen Verbrauchsdaten als Datenfeld zur Verfügung zu stellen. Es ist nun nicht mehr erforderlich, eine Messeinheit in die Steuereinheit 3 oder die Stromquelle 13 zu integrieren, um den Stromverbrauch der Verbrauchergruppe 10, 11 zu ermitteln.

### b) Ausführungsbeispiel 2: Verbraucher 12 als Temperatursensor.

Geht man davon aus, dass der Verbraucher 12 als Temperatursensor die Temperatur beispielsweise des Verbrauchers 10 messen kann, so kann auch eine Kennlinie erstellt werden, die in Abhängigkeit der Temperatur des Verbrauchers 10 eine Bestimmung der derzeitigen Leistung bzw. des derzeitigen Verbrauchs des Verbrauchers 10 zulässt. Da der Verbraucher 11 zusammen mit dem Verbraucher 10 einer Verbrauchergruppe 10, 11 zugeordnet ist und folglich beide Verbraucher die gleichen Steuerbefehle erfahren, ist eine weitere Temperaturmessung am Verbraucher 11 nicht notwendig. Geht man weiter davon aus, dass die Verbraucher 10 und 11 Heizelemente eines Elektroofens sind, so kann über eine Temperaturmessung des Verbrauchers 10 gegebenenfalls in Abhängigkeit von der Zeit, der Stromverbrauch des Elektroofens dargestellt werden. Als Verbrauchsdaten bietet sich wieder ein Datenfeld, ähnlich wie im Ausführungsbeispiel 1 an, welches die gegebenenfalls mit einem konstanten Wert skalierten Messergebnisse des Temperatursensors 12 enthält.

Hierbei ist ebenso denkbar, dass der Temperatursensor zu einer anderen Steuereinheit gehört und die Parameter desselben über den Bus 2 an die Steuereinheit 3 geliefert werden. Die Steuereinheit 3 verknüpft dann den fernübertragenen Parameter des Temperatursensors mit dem Zeitparameter und stellt die Verbrauchsdaten gegebenenfalls über den Bus 2 wieder zur Verfügung.

Aufgrund der Trägheit der am Verbraucher 10 angereicherten Wärme ist klar, dass ein Parameter, der mittels des Temperatursensors 12 oder einem anderen Temperatursensor ermittelt wird, nur näherungsweise zu einer Indikation eines Stromverbrauchs führen kann. Allerdings ist die Präsenz des Temperatursensors ohnehin erforderlich und führt deshalb zu keinem zusätzlichen Installationsaufwand, aber immerhin zu einem Näherungswert des lokalen Stromverbrauchs.

### c) Ausführungsbeispiel 3: Verbraucher 10 und 11 als dimmbare Lichtquellen.

Der Steuereinheit 3 ist zur Steuerung das Schaltverhalten sowie der Dimmzustand der Verbrauchergruppe 10, 11 bekannt. Auch in diesem Fall ist es möglich, beispielsweise mittels einer Kennlinie, zu einer Zuordnung von Verbrauch pro Zeiteinheit zu gelangen, wenn die Schaltzeiten als Parameter der Steuereinheit 3, sowie der Dimmzustand als Parameter der Steuereinheit 3 vorliegen. In einer ähnlichen Weise wie im Ausführungsbeispiel 1 ist somit der Verbrauch in Form von Verbrauchsdaten darstellbar, wobei das verwendete Datenfeld keine boolschen Variablen, sondern Integerzahlen oder Real-Zahlen beinhaltet.

Daten, die zur Verbrauchsbestimmung notwendig sind, können beispielsweise in Form von Verbrauchskurven oder Kennlinien von der Steuerungseinheit 3 oder über den Bus 2 zur Verfügung gestellt werden. Ebenfalls ist eine Einstellung derartiger Information über die zentrale Einheit 1 denkbar. Einzelne Verbrauchsparameter, die beispielsweise den Gerätegruppen oder Einzelverbrauchern zugeordnet werden können, sind in der Steuereinheit, also beispielsweise in einem oder mehreren Kanälen eines Aktors einstellbar.

Zusammenfassend betrifft die Erfindung eine Steuereinheit zur Steuerung mindestens eines Verbrauchers, wobei die Steuereinheit zur Kommunikation mit mindestens einer zentralen Einheit vorgesehen ist. Es soll eine kostengünstige und einfache Lösung zur Verbrauchserfassung mittels einer Steuereinheit angegeben werden, die zur Ableitung von Verbrauchsdaten aus mindestens einem der Steuereinheit zur Verfügung stehenden Parameter vorgesehen ist, wobei die Verbrauchsdaten zur Charakterisierung eines Verbrauchs einer Ressource, beispielsweise einer technischen Anlage, vorgesehen sind. Aufwendige Zähler, wie z. B. Stromzähler, zur Verbrauchserfassung, werden durch die erfindungsgemäße Steuereinheit hinfällig. Somit wird der Einsatz einer Vielzahl erfindungsgemäßer Steuereinheiten bei gegebenenfalls dezentraler Versorgung der Ressource, wie z.B. Strom, unterstützt.

## Patentansprüche

1. Steuereinheit (3) zur Steuerung mindestens eines Verbrauchers (10, 11, 12), wobei die Steuereinheit (3) zur Kommunikation mit mindestens einer zentralen Einheit (1) vorgesehen ist, **dadurch gekennzeichnet , dass** die Steuereinheit (3) zur Ableitung von Verbrauchsdaten aus mindestens einem der Steuereinheit (3) zur Verfügung stehenden Parameter vorgesehen ist, wobei die Verbrauchsdaten zur Charakterisierung eines Verbrauchs einer Ressource (13) vorgesehen sind.

2. Steuereinheit (3) nach Anspruch 1, wobei die Steuereinheit (3) zum Anschluss an einem Kommunikationsbus und/oder an ein Kommunikationsnetz, insbesondere einen European Installation Bus bzw. INSTABUS, vorgesehen ist.

3. Steuereinheit (3) nach einem der Ansprüche 1 oder 2, wobei der Steuereinheit (3) zur Ableitung von Parametern aus der Kommunikation mit der zentralen Einheit (1), mit einer anderen Steuereinheit und/oder mit einem anderen Element des Kommunikationsnetzes bzw. Kommunikationsbusses (2) vorgesehen ist.

4. Steuereinheit (3) nach einem der vorhergehenden Ansprüche, wobei die Steuereinheit (3) zur Ableitung von mindestens einem Parameter aus einem Steuerparameter, Sensorparameter und/oder aus einem zuvor abgeleiteten Parameter vorgesehen ist.

5. Steuereinheit (3) nach einem der vorhergehenden Ansprüche, wobei die Verbrauchsdaten als Werte, Datenfeld oder Datensatz ausgeführt sind.

6. Steuereinheit (3) nach einem der vorhergehenden Ansprüche, wobei die Verbrauchsdaten aus verbrauchsrelevanten Parametern gebildet werden.

7. Steuereinheit (3) nach einem der Ansprüche 2 bis 6, wobei die Verbrauchsdaten einem Nutzer, dem anderen Element des Kommunikationsnetzes und/oder der zentralen Einheit (1) zugänglich sind.

8. Steuereinheit (3) nach einem der vorhergehenden Ansprüche, wobei die Kommunikation der Steuereinheit (3) mit dem Nutzer, dem anderen Element des Kommunikationsnetzes und/oder der zentralen Einheit (1) zumindest teilweise drahtlos ist.

9. Steuereinheit (3) nach einem der vorhergehenden Ansprüche, wobei der Verbraucher (10, 11, 12) zum Verbrauch mindestens einer Ressource, insbesondere Strom, Gas, Wasser, Brennstoff und/oder Energie, vorgesehen ist.

10. Steuereinheit (3) nach einem der vorhergehenden Ansprüche, wobei die Steuereinheit (3) zur Steuerung mindestens einer Verbrauchergruppe (10, 11) und/oder mindestens eines weiteren Verbrauchers (12) vorgesehen ist.

11. Steuereinheit (3) nach einem der vorhergehenden Ansprüche, wobei die Steuereinheit (3) ein Aktor, ein INSTABUS-Aktor oder ein EIB-Aktor, insbesondere ein Lastschalter oder Dimmer, ist.

12. Verfahren zur Steuerung mindestens eines Verbrauchers (10, 11, 12), wobei wenigstens eine Steuereinheit (3) mit mindestens einer zentralen Einheit (1) kommuniziert, **dadurch gekennzeichnet, dass** die Steuereinheit (3) zur Charakterisierung eines Verbrauchs einer Ressource wenigstens aus einem der Steuereinheit (3) zur Verfügung stehenden Parameter Verbrauchsdaten ableitet.

13. Verfahren nach Anspruch 12, wobei die Steuereinheit (3) aus der Kommunikation mit der zentralen Einheit (1), mit einer anderen Steuereinheit und/oder einem anderen Element des Kommunikationsnetzes oder Kommunikationsbusses (2) Parameter ableitet.

14. Verfahren nach einem der Ansprüche 12 oder 13, wobei die Steuereinheit (3) aus einem Steuerparameter, Sensorparameter und/oder aus einem zuvor abgeleiteten Parameter einen Parameter ableitet.

15. Verfahren nach einem der Ansprüche 12 bis 14, wobei die Verbrauchsdaten verbrauchsrelevante Parameter verknüpfen.

16. Verfahren nach einem der Ansprüche 12 bis 15, wobei die Verbrauchsdaten einem Nutzer, dem anderen Element des Kommunikationsnetzes und/oder der zentralen Einheit (1) zugänglich gemacht werden.

17. Verfahren nach einem der Ansprüche 12 bis 16, wobei die Kommunikation der Sensoreinheit (3) mit dem Nutzer, mit dem anderen Element des Kommunikationsnetzes und/oder mit der zentralen Einheit (1) zumindest teilweise drahtlos erfolgt.

18. Verfahren nach einem der Ansprüche 12 bis 17, wobei die Steuereinheit (3) einen Verbraucher steuert, der mindestens eine Ressource, insbesondere Strom, Gas, Wasser, Brennstoff und/oder Energie, verbraucht.

19. Verfahren nach einem der Ansprüche 12 bis 18, wobei die Steuereinheit (3) mindestens eine Verbrauchergruppe (10, 11) und/oder mindestens einen weiteren Verbraucher (12) steuert.
